Europäisches Patentamt

European Patent Office

Office européen des brevets

(11) Publication number: 0 394 880
A2

# EUROPEAN PATENT APPLICATION

(21) Application number: 90107575.4

(22) Date of filing: 20.04.90

(51) Int. Cl.5: G01B 3/04

(30) Priority: 26.04.89 JP 48271/89

(43) Date of publication of application:
31.10.90 Bulletin 90/44

(84) Designated Contracting States:
DE GB

(71) Applicant: Toppan Printing Co., Ltd.
5-1, 1-chome, Taito
Taito-ku Tokyo(JP)

(72) Inventor: Kohira, Takeo, c/o Toppan Printing
Co. Ltd.
5-1, Taito 1-chome, Taito-ku
Tokyo(JP)
Inventor: Okanoue, Kenichi, c/o Toppan
Printing Co. Ltd.
5-1, Taito 1-chome, Taito-ku
Tokyo(JP)

(74) Representative: Pätzold, Herbert, Dr.-Ing.
Steubstrasse 10
D-8032 Gräfelfing(DE)

(54) Handy-size electronic rule with built-in calculator.

(57) A handy-size electronic rule comprises a rule unit including a graduated member (21f) and a slider member (21b) supported by the graduated member and movable therealong, an electronic measuring unit (34) for deciding a distance between two target points depending upon a length overwhich the slider member is moved, and an electronic calculating unit (21i) for calcurating a ratio of a first distance to a second distance, and the first and second distances are decided by the electronic measuring unit and automatically supplied thereto, so that the ratio is given without any error in data input.

FIG.4

EP 0 394 880 A2

# HANDY-SIZE ELECTRONIC RULE WITH BUILT-IN CALCULATOR

## FIELD OF THE INVENTION

This invention relates to an electronic rule and, more particularly, to an electronic rule for not only measuring a distance but also calculating a magnification ratio on the basis of distances measured.

## DESCRIPTION OF THE RELATED ART

Prior to putting manuscripts in type, an editor casts off articles and photographs on a predetermined-size paper, and a block copy thus arranged is used for the type setting. Since a photograph is well balanced with an article in the layout, the photograph is usually enlarged or shrunk in size, and the editor is expected to decide the magnification ratio while editing.

Namely, the editor measures an original photograph and an area in the block copy where the photograph is allotted, and the magnification ratio is manually calculated with or without an electronic calculator.

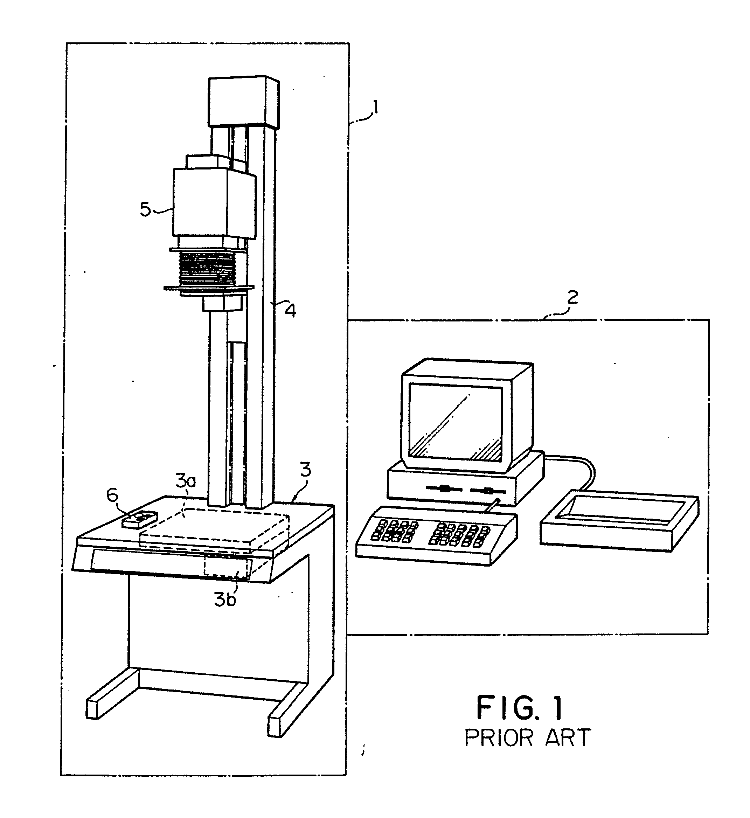

However, such a manual calculation is not so smart that a digitizer system is proposed for an automatic calculation. Fig. 1 shows a typical example of the digitizer system presently available in the art and largely comprises a projection unit 1 coupled to a desktop-size computer system 2. In detail, the projection unit 1 comprises a screen table 3 with an image forming area 3a, a supporting pole 4 upwardly projecting from the table 3, a projector 5 movable along the supporting pole 4, and a positioner 6 for assigning a frame for an image fallen upon the image forming area. The image forming area 3a is associated with a magnification ratio detector 3b, and the magnification ratio detector 3b decides the magnification ratio of the image in the area 3a depending upon the distance between the screen table 3 and the projector 5.

If an article is accompanied with a photograph, the editor inserts the photograph into the projector 5, and assigns a frame in the image forming area 3a with the positioner 6. The projector 5 is moved upwardly or downwardly so that the image on the photograph is matched with the frame previously assigned, and the image thus regulated in size is converted into digital signals which are transferred to the desktop size computer system for displaying. The magnification ratio detector 3b decides the magnification ratio depending upon the frame size and the distance between the projector 5 and the screen table 3, and the magnification ratio is also reported to the desktop size computer system.

The digitizer system semi-automatically arranges the layout and automatically calculates the magnification ratio, so that the magnification ratio is free from errors made in calculation and in input of the data indicative of the sizes of the original photograph and the frame assigned thereto. However, the digitizer system is so large and expensive that the editor can not privately use it, and, for this reason, his schedule is frequently disturbed by another editor.

## SUMMARY OF THE INVENTION

It is therefore an important object of the present invention to provide a handy-size tool which is used in the casting off for the block copy.

It is also important object of the present invention to provide a handy-size electronic rule unit which decides the magnification ratio without any data input.

To accomplish these objects, the present invention proposes to calculate a ratio of a first distance to a second distance with a built-in calculator.

In accordance with the present invention, there is provided an electronic rule comprising a) a rule unit including a graduated member and a slider member supported by the graduated member and movable therealong, the slider member having a mark for providing an interrelation between the graduated member and an object, b) measuring means for deciding a distance between two target points depending upon a length over which the slider member is moved, and c) magnifi cation ratio calculating means for calculating a ratio of a first distance to a second distance, the first and second distances being decided by the measuring means and supplied thereto.

## BRIEF DESCRIPTION OF THE DRAWINGS

The features and advantages of an electronic rule with a built-in calculator according to the present invention will be more clearly understood from the following description taken in conjunction with the accompanying drawings in which:

Fig. 1 is a perspective view showing the arrangement of the prior art digitizer system used in a casting off procedure for a block copy;

Fig. 2 is a perspective view showing the outward appearances of an electronic rule embodying the present invention;

Fig. 3 is a perspective view showing, in an enlarged scale, a part of a rule unit forming part of the electronic rule shown in Fig. 2;

Fig. 4 is a cross sectional view showing the structure of the electronic rule shown in Fig. 2;

Fig. 5 is a plan view showing the arrangement of a manipulating panel provided in a slider member of the rule unit;

Fig. 6 is a block diagram showing the arrangement of electronic circuits incorporated in the electronic rule;

Fig. 7 is a block diagram showing an encoder unit of the capacitor array type incorporated in the slider member;

Fig. 8 is a plan view showing the relativity between emitting, receiving and auxiliary electrodes forming parts of the encoder unit shown in Fig. 7;

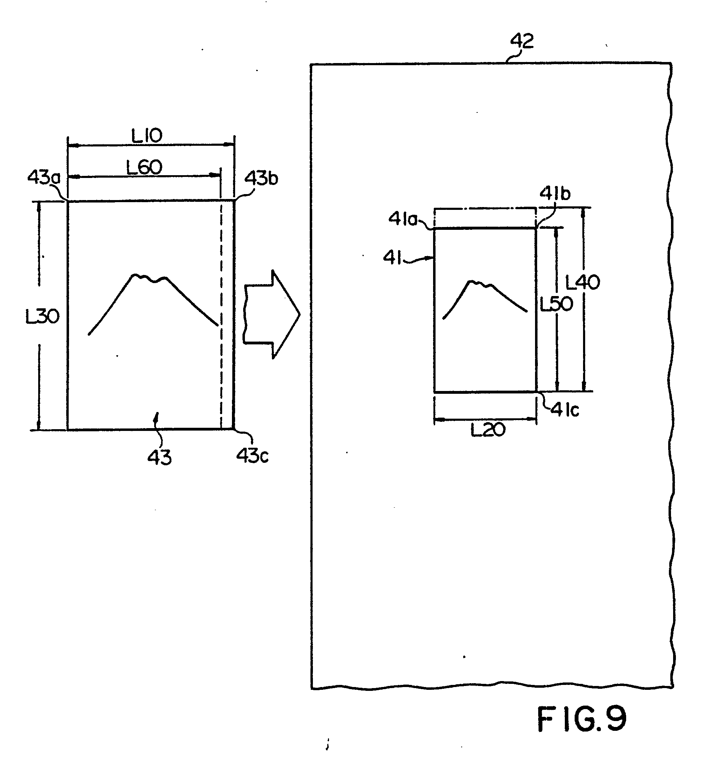

Fig. 9 is a plan view showing an original photograph and an area in a block copy assigned to the original photograph;

Figs. 10A and 10B are flowcharts showing the sequence of a method for deciding a magnification ratio;

Fig. 11 is a flow chart showing a main program sequence executed for achieving the method shown in Figs. 10A and 10B;

Fig. 12 is a flow chart showing a sub-routine program executed upon depressing a "zero" switch provided on the manipulating panel shown in Fig. 5;

Fig. 13 is a flow chart showing a sub-routine program periodically executed for deciding the actual position of a cursor;

Figs. 14A and 14B are flow charts showing a sub-routine program executed upon depressing an "enter" switch provided on the manipulating panel shown in Fig. 5;

Fig. 15 is a flow chart showing a sub-routine program executed upon depressing a percentage switch provided on the manipulating panel shown in Fig. 5; and

Fig. 16 is a flow chart showing a sub-routine program executed upon depressing a confirmation switch provided on the manipulating panel shown in Fig. 5.

## DESCRIPTION OF THE PREFERRED EMBODIMENT

### Mechanical Structure

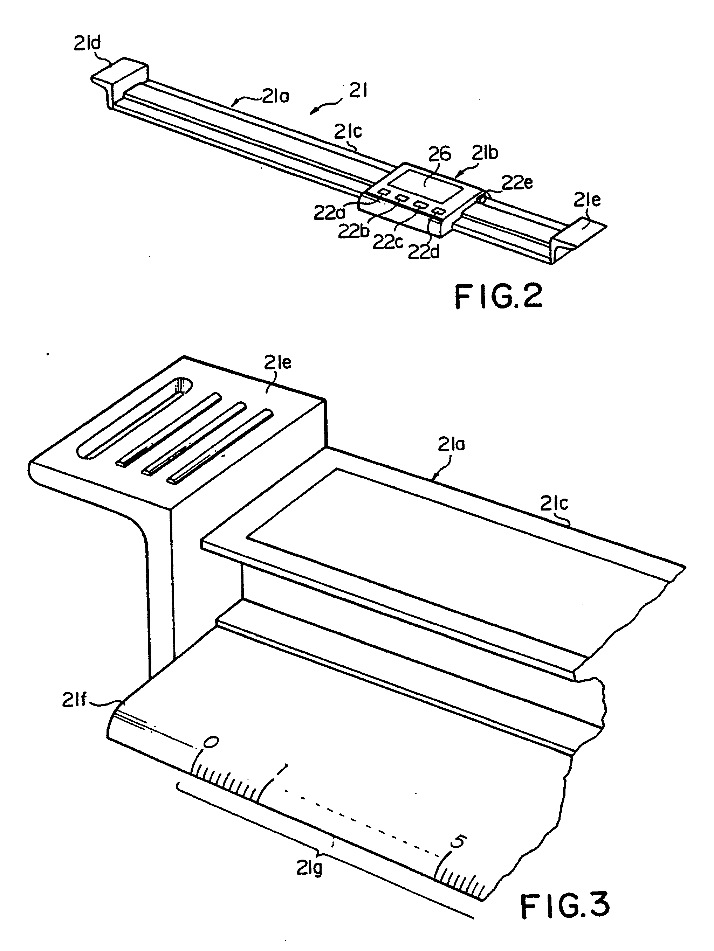

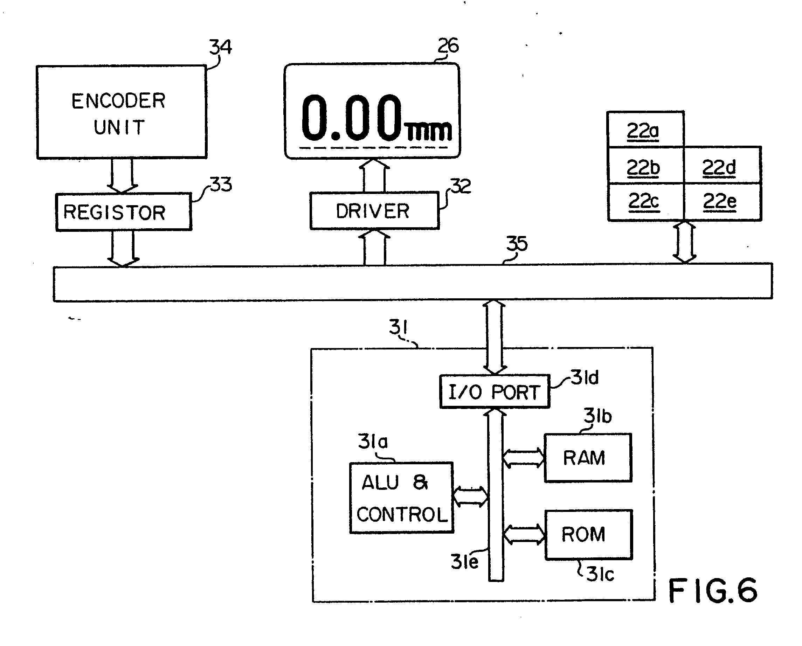

Referring first to Fig. 2 of the drawings, an electronic rule embodying the present invention largely comprises a rule unit 21 and electronic circuits (shown in Fig. 6) associated with the rule unit 21 and communicable with switches 22a, 22b, 22c, 22d and 22e, an encoder as well as with a liquid-crystal display panel 26. The rule unit 21 comprises a graduated member 21a and a slider member 21b movable along the graduated member 21a, and the graduated member 21a has a rail block connected at both ends thereof to weight blocks 21d and 21e, respectively. As will be seen from Fig. 3, a transparent plate 21f of, for example, a synthetic resin projects from one side of the rail block 21c, and a plurality of scratched lines 21g are provided along the edge of the transparent plate 21f at regular intervals. Each interval between the adjacent scratched lines 21g is equivalent to a unit of length (or one millimeter), and the leftmost line is spaced from the rightmost line by 30 centimeters. Each of the weight blocks 21d and 21e is a generally inverted-L in cross section, so that an editor easily grasps at the weight blocks 21d and 21e, carries and put it on a block copy by way of example. The total weight of the electronic rule is light enough for an ordinary editor to carry in his hands, but the weight blocks 21d and 21e provide a stability to the electronic rule.

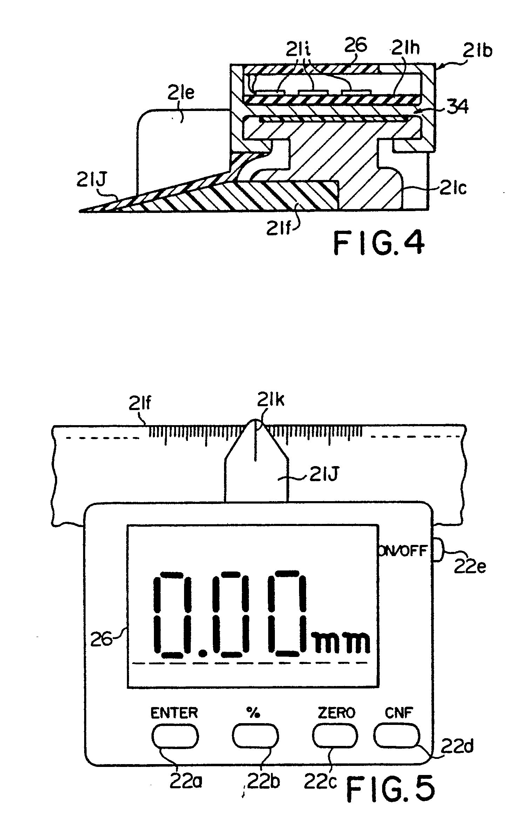

Turning to Fig. 4 of the drawings, the slider member 21b is supported on the rail block 21c, and a hollow space is formed in the slider member 21b. In the hollow space is accommodated a circuit board 21h where a plurality of semiconductor integrated circuit devices 21i including a single-chip microcomputer are mounted and electrically interconnected for communication. Aforementioned electronic circuits are implemented by the semiconductor integrated circuit devices 21i and will be described in detail with reference to Fig. 6. The hollow space is closed with the liquid-crystal display panel 26, and the liquid-crystal panel 26 is driven by one of the semiconductor integrated circuits 21i under the supervision of the single chip microcomputer. From the rear surface of the slider member 21b projects a flexible transparent strip member or a cursor 21j which slides over the transparent plate 21f with the slider member 21b. The flexible strip 21j is formed with a narrow line 21k at the leading end portion thereof, and the cursor 21j provides an interrelation between a target point and the scratched lines 21g. The narrow line 21k thus formed at the leading end portion makes the editor easily decide the initial and terminal points of a line to be measured.

### Arrangement of the Manipulating Panel

Turning to Fig. 5 of the drawings, the arrangement of the manipulating panel is illustrated and comprises the liquid-crystal display panel 26 occupying most of the manipulating panel and the five switches 22a to 22e labeled with 'ENTER", "%", "ZERO", "CNF" and "ON/OFF", respectively. On the liquid-crystal display panel are formed an Arabic numeral accompanied with a unit of length "mm (millimeter)", and the Arabic numeral is indicative of a distance over which the slider unit 21b travels.

The switch "ON/OFF" 22e is of the toggle switch for power-on and power-off, and the switches 22a to 22d are respectively assigned instructions to the single chip microcomputer. Namely, the switch 22a is depressed when the cursor "ENTER" 21j reaches the terminal point of a line to be measured, and the distance thus traveled is internally memorized in response to the instruction to be given through depressing the switch 22a. The switch "%" 22b stands for an instruction of calculation, and a ratio between two distances is calculated in response to the instruction given through depressing the switch 22b. The switch 22c is provided for power saving as well as decision of an initial point of a line to be measured. If the switch 22c is continuously depressed over, for example, a second, such a long manipulation allows fetching a positional data signal indicative of the initial point. On the other hand, when the switch 22c is depressed for a while less than 1 second, the liquid-crystal display panel 26 is deenergized and, accordingly, all of the characters disappears from the display panel 26. The switch 22d allows the liquid-crystal display panel 26 to indicate two kinds of data one of which is estimated on the basis of the ratio between two distances calculated upon depressing the switch 22b and the other of which is actually measured by adjusting the cursor 21j. Comparing these two kinds of data, the editor confirms whether or not the actual distance is fallen within the range estimated through calculation.

Arrangement of the Electronic Circuits

The arrangement of the electronic circuits associated with the slider member 21b is illustrated in Fig. 6. The electronic circuits includes the single chip microcomputer 31, a panel driver 32 coupled to the liquid-crystal display panel 26 and a data registor 33 for memorizing a positional data signal periodically fed from an encoder unit 34 of a capacitor array type. The single-chip microcomputer 31 contains a combined circuit of an arithmetic-and-logic unit and a controlling unit 31a (which is simply referred to as "control" hereinbelow), a random access memory 31b for working registers, a read only memory for an instruction storage, an input-and-output port 31d and an internal bus system 31e interconnecting these component circuits; however, those component circuits are well known in the art, and, for this reason, no further description is incorporated.

The input-and-output port 31d is coupled to an external wiring system 35 which in turn is coupled to the switches 22a to 22e, the panel driver 32 and the data registor 33, and the single chip microcomputer 31 periodically scans the switches 22a to 22e and checks to see whether or not the switches 22a to 22e are manipulated. The single chip microcomputer 31 is communicable with the panel driver 32 and gives instructions thereto for displaying either distance or ratio. The signal chip microcomputer 31 periodically accesses the data registor 33 and fetches the positional data signal which are used for determination of a distance.

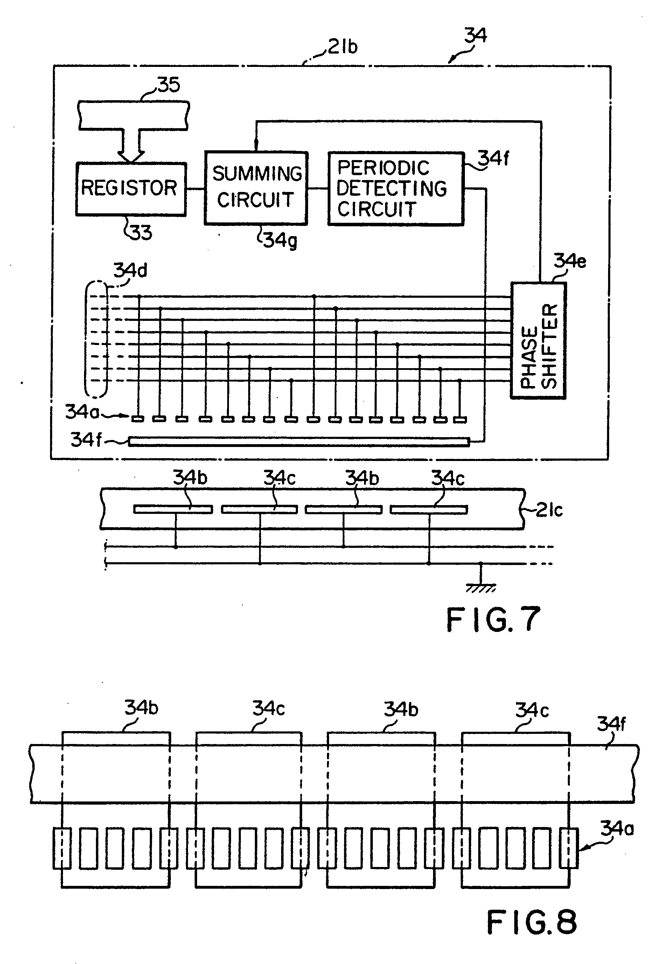

The encoder unit 34 of the capacitor array type is well known in the art and, for this reason, briefly described with reference to Figs. 7 and 8. The encoder unit 34 has a plurality of emitting electrodes 34a disposed in a row, and the emitting electrodes 34a are provided in the slider member 21b. The encoder unit 34 further has a plurality of receiving electrodes 34b and a plurality of spacing electrodes 34c alternately disposed in a row and embedded in the rail block 21c. Since the spacing electrodes 34c is grounded, each of the receiving electrodes 34b is electrically isolated from the adjacent receiving electrodes 34b and fixed to a certain voltage level different from the ground voltage level. The receiving electrodes are opposed to the emitting electrodes 34a in spacing relationship, and the emitting electrodes 34a are laterally movable over the receiving electrodes 34c with the slider member 21b. The emitting electrodes 34a are grouped by eight, and the emitting electrodes 34a of each group are coupled to eight signal lines 34d, respectively. The eight signal lines 34d respectively propagate alternating currents slightly different in phase from one another, and the alternating currents are produced by a phase shifter 34e and supplied in parallel to the eight signal lines 34d. The emitting electrodes 34a are capacitively coupled to the receiving electrodes 34c, and the total capacitance is varied in the presence of the alternating currents depending upon the relative location between the emitting electrodes 34a and the receiving electrodes 34b. The capacitive signals thus transferred between the emitting electrodes 34a and the receiving electrodes 34b are monitored by an auxiliary elec trode 34f, and the auxiliary electrode 34f reports the variation to a periodic detecting circuit 34f. The periodic detecting circuit 34f decides the amount of movement in either direction, and the total amount of movement is memorized in a summing circuit 34g in the form of a digital code. The total amount of movement is indicative of a position spaced apart from a starting or "zero" point, and the positional data signal representative of the position is fed from the data registor 33 through the external wiring system 35 to the single chip microcomputer 31. Fig. 8 shows the relativity between the emitting, receiving and auxiliary electrodes 34a, 34b, 34c and 34f on the assumption that these electrodes 34a, 34b, 34c and 34f are projected on a virtual plane.

Method for Deciding the Magnification Ratio

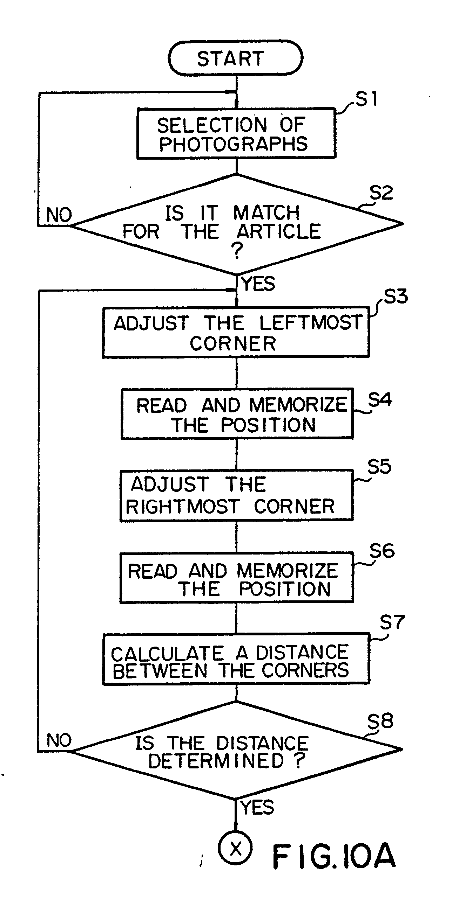

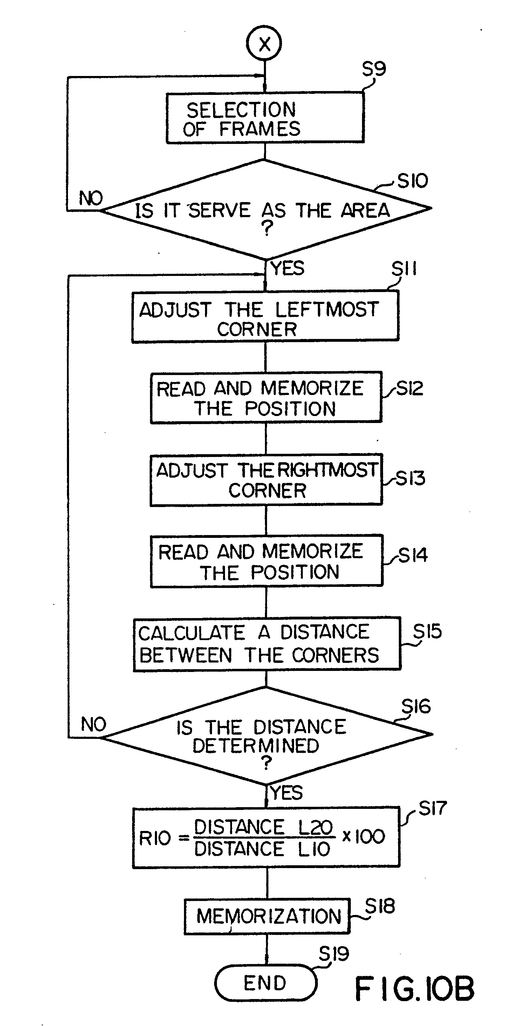

Assuming now that a relatively small area 41 of a block copy 42 is assigned an original photograph 43, the editor traces a sequence illustrated in Figs. 10A and 10B for deciding a magnification ratio between the original photograph 43 and the area 41 assigned thereto. First, the editor picks up a photograph as by step S1, and checks the photograph to see whether or not the photograph is match for an article as by step S2. If there is found that the photograph is not match for the article, the answer to the step S2 is given in the negative, and the editor returns to the step S1 for another photograph. Thus, the editor reiterates the loop consisting of the steps S1 and S2 and selects the photograph match for the article.

If a photograph is match for the article, the answer to the step S2 is given in the positive, and the editor adjusts the leftmost corner 43a to the mark on a rule as by step S3. The editor reads and memorizes the position of the leftmost corner 43a on the rule as by step S4, and adjusts the rightmost corner 43b to the rule as by step S5. The position of the rightmost corner 43b is read on the rule and memorized again as by step S6. If the positions of both corners are thus decided, the value of the leftmost position is subtracted from the value of the rightmost position as by step S7, and a distance L10 between the corners 43a and 43b is determined through the subtraction. If any error is made in the measurement or in the calculation, the answer to step S8 is given in the negative, and the editor repeats the loop consisting of the steps S3 to S8 until the answer to the step S8 changes in the positive.

If the distance L10 is finally determined, the editor proceeds to step S9 to direct his attention to the block copy 42. The editor checks any frame in the block copy 42 to see whether or not the frame serves as the area assigned to the photograph 43 as by step S10. If the frame is not desirable for the area 41, the answer to the step S10 is given in the negative, and the editor returns to the step S9 to select the area from the frames. Thus, the editor reiterates the loop consisting of the steps S9 and S10 until the editor looks for the area 41 assigned to the photograph 43. If the editor finds the area 41 assigned to the photograph 43, he proceeds to step S11 to adjust the leftmost corner 41a to the mark point on the rule as by step S11. The editor reads the position of the leftmost corner 41a and memorizes it as by step S12. The editor adjusts the rightmost corner 41b to the rule again as by step S13, and the position of the rightmost corner 41b is read and memorized by the editor as by step S14. A distance between the leftmost corner 41a and the rightmost corner 41b is given by subtracting the value of the leftmost corner 41a from the value of the rightmost corner 41b as by step S15. If any error is made in the measurement, the answer to step S16 is given in the negative, then the editor returns to the step S11 and repeats the loop consisting of the steps S11 to S16. When the answer to the step S16 is given in the positive, the editor proceeds to step S17, and a magnification ratio R10 is calculated as

$$R10 = (L20/L10) \times 100 \qquad \text{(Equation 1)}$$

where L10 and L20 are indicative of the distances L10 and L20, respectively.

The magnification ratio R10 thus calculated is memorized in association with the photograph 43 as by step S18, and the arrangement of the photograph 43 is completed as by step S19.

Software for the Method

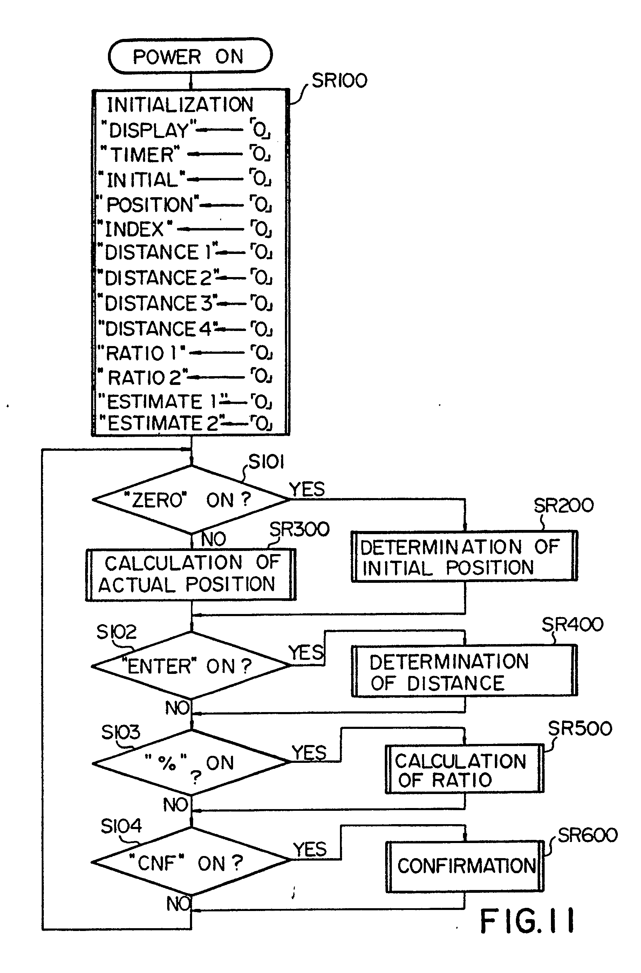

Fig. 11 shows the sequence of a main routine program executed by the single chip microcomputer 31. However, prior to description on the software, data codes memorized in the working registors 31b are briefly described hereinbelow.

One of the working registers 31b is assigned a flag "DISPLAY". If the flag "DISPLAY" is set to be "1", the panel driver 32 allows the liquid-crystal display 26 to indicate a distance or a ratio; however, the flag "DISPLAY" of "0" instructs the panel driver 32 to deenergize the liquid-crystal display 26. The working registor assigned the flag is also referred to as "DISPLAY".

A timer is implemented by a software, and a data code labeled with "TIMER" is indicative of the lapse of time from execution of the software for the timer. One of the working registors 31b is assigned to the data code "TIMER", and the working registor is also referred to as "TIMER".

A data code "INITIAL" is indicative of the position of an initial point on the rule, and any distance is measured from the initial point. In other words, any of the distances is given as an interval between the initial point and a target point. The data code "INITIAL" is memorized in another working register labeled with "INITIAL".

A data code "POSITION" is memorized in still another working register "POSITION", and is indicative of the position of the cursor 21j. The single chip microcomputer 31 periodically fetches the positional data signal and produces the data code "POSITION".

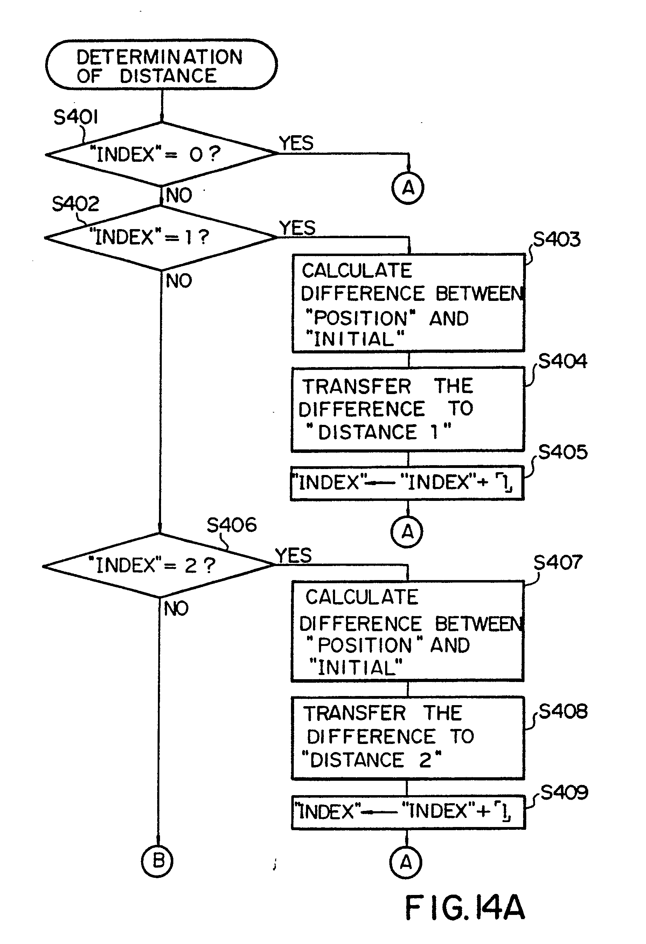

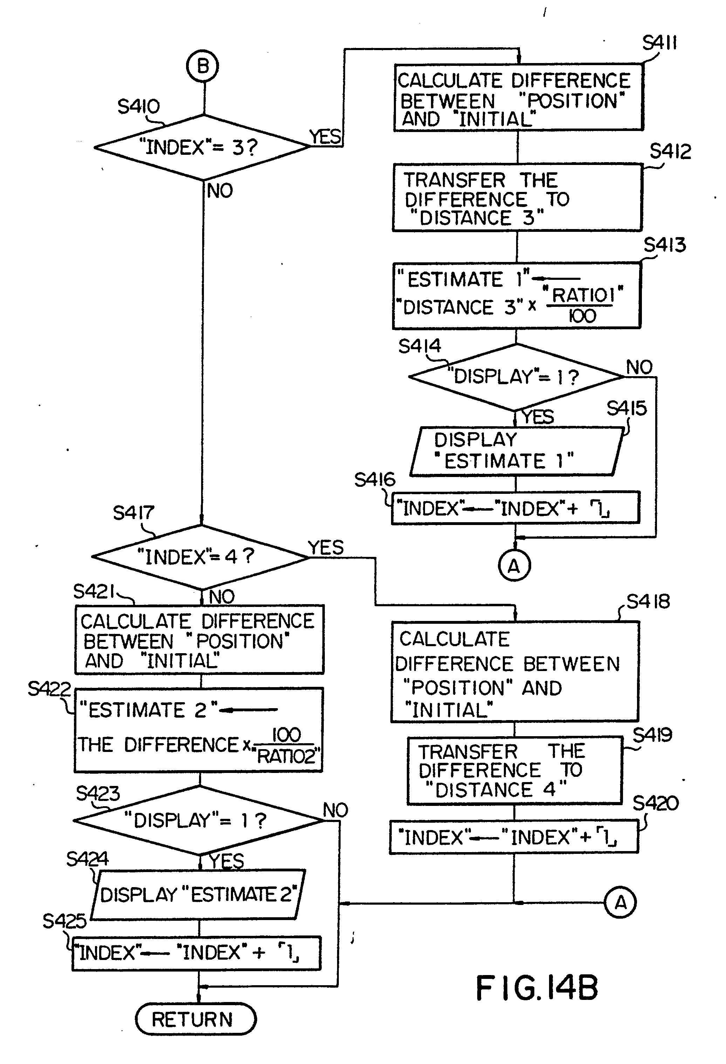

An index code is memorized in still another working register labeled with "INDEX", and the index code "INDEX" is indicative of the status in the program sequence. Namely, if the index code "INDEX" is "1", the initial position has been decided and memorized in the working register "INITIAL", and the single chip microcomputer 31 is allowed to calculate the actual lateral distance L10 of the original photograph 43. The index code "INDEX" of value 2 allows the single chip microcomputer 31 to calculate the actual lateral distance L20 of the area 41 and a magnification ratio between the distances L10 and L20, but the single chip microcomputer 31 measures an actual vertical distance L30 and estimates a vertical distance L40 in the presence of the index code "INDEX" of value "3". With the index code "INDEX" of value 4, the single chip microcomputer 31 measures an actual vertical distance L50 of the area 41, and the index code "INDEX" of value 5 allows the single chip microcomputer 31 to estimate a lateral distance L60 for comparing the actual lateral distance L10 with the distance L60 to be estimated. Detailed description will be made with reference to Figs. 14A and 14B.

A data code "DISTANCE 1" is assigned to still another working register 31b and is indicative of the actual lateral distance L10 of the original photograph 43. A data code "DISTANCE 2" is indicative of the actual lateral distance L20 of the area 41 in the block copy 42, and one of the working registers 31b is assigned to the data code "DISTANCE 2". Data codes "DISTANCE 3" and "DISTANCE 4" respectively stand for the actual vertical distance L30 of the original photograph 43 and the actual vertical distance L50 of the area 41, and the working registers assigned the distances L10, L20, L30 and L50 are named with the same labels.

A ratio of the actual lateral distance L20 to the actual lateral distance L10 is calculated by the single chip microcomputer 31 and is memorized in a working register "RATIO 1". The ratio is referred to as "RATIO 1" in the program sequence. The single chip microcomputer 31 further calculates a ratio of the actual vertical distance L50 to the actual vertical distance L30, and the ratio is labeled with "RATIO 2". The ratio "RATIO 2" is assigned to still another working register "RATIO 2", and those ratios are used by the editor to see whether or not the actual distances "L50 and "10" are fallen within respective ranges.

Two more working registers "ESTIMATE 1"

and "ESTIMATE 2" are prepared in the random access memory 31b. When the ratio "RATIO 1" is decided, the single chip microcomputer 31 estimates the distance L40. If the distance L40 is smaller than the actual vertical distance L50, the area 41 is large enough to accommodate a shrunk or enlarged photograph. However, if not, some rearrangement may be necessary. With the ratio "RATIO 2", the single chip microcomputer 31 further estimates the lateral distance L60, and the editor confirms that the actual distance L10 is larger than the distance L60 to be estimated.

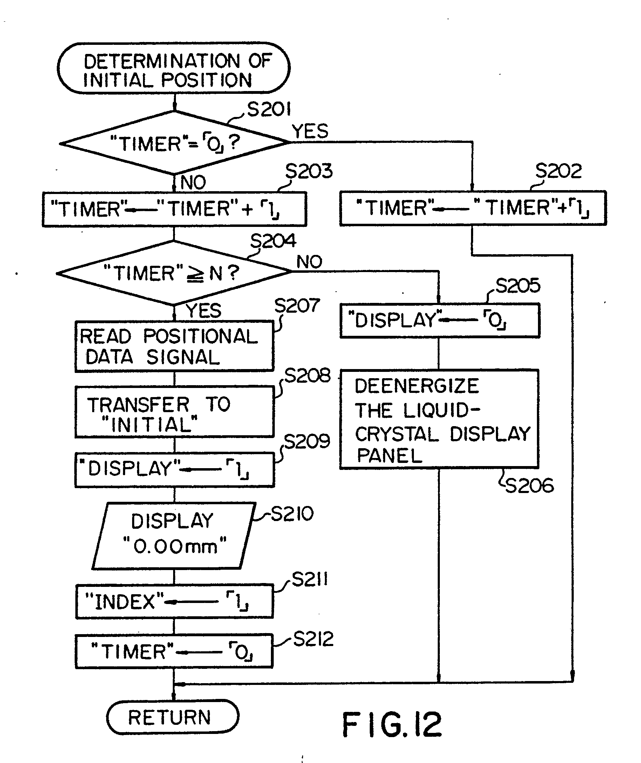

Description is hereinbelow made on the program sequence executed by the single chip microcomputer 31 with reference to Figs. 11 to 16. After a power-on event, the single chip microcomputer 31 repeats a main routine program shown in Fig. 11, and is branched to any one of the sub-routine programs illustrated in Figs. 12, and 14A to 16 upon acknowledgement of manipulation on the manipulating panel.

The main program sequence starts with an initialization sub-routine program SR100 where the flag "DISPLAY", the index code "INDEX" and the working registers "TIMER", "INITIAL", "POSITION", "DISTANCE 1" to "DISTANCE 4", "ESTIMATE 1" and "ESTIMATE 2" are supplied with the flag, the index code and the data codes of value "0", respectively. Of course, other initializing process are executed for the electronic circuits, however, no description is incorporated because such an initializing process is not directly related to the gist of the invention.

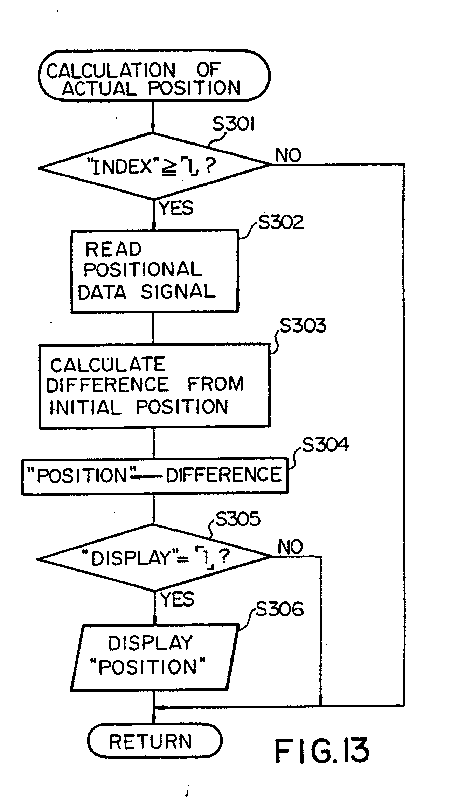

When the initialization sub-routine program SR100 is completed, the single chip microcomputer 31 proceeds to step S101 to check the manipulating panel to see whether or not the switch "zero" 22c is manipulated or depressed by the editor. If there is found that the switch 22c is depressed, the answer to the step S101 is given in the positive, then the single chip microcomputer 31 proceeds to a sub-routine program SR200 illustrated in Fig. 12; however, if the answer to the step S101 is given in the negative, no manipulation is made on the switch 22c, then the single chip microcomputer 31 proceeds to a sub-routine program SR300 illustrated in Fig. 13.

Since the switch 22c is usually not manipulated immediately after the power-on event, the answer to the step S101 is given in the negative, and the single chip microcomputer 31 proceeds to the sub-routine program SR300. In the sub-routine program SR300, the single chip microcomputer 31 checks the working register array to see whether or not the index code "INDEX" is equal to or larger in value than value "1" as by step S301. Since the index code "INDEX" has been set to be value "0" in the initialization program SR100, the answer to the step S301 is given in the negative, then the single chip microcomputer 31 immediately returns to the main routine program without any execution of steps S302 to S306.

The single chip microcomputer 31 sequentially checks the switches 22a, 22b and 22d to see whether or not any one of the switches 22a, 22b and 22d is manipulated by the editor as by steps S102 to S104. If one of the switches 22a, 22b and 22d is manipulated, the answer to the step S102, S103 or S104 is given in the positive, then the single chip microcomputer 31 proceeds to a sub-routine program SR400, SR500 or SR600. However, when there is found that no switch is manipulated by the editor, the single chip microcomputer 31 returns to the step S101 and reiterates the loop consisting of the steps S101 to S104 until any one of the switches 22a to 22d is manipulated.

Prior to a manipulation of the switch 22c, any one of the switches 22a, 22b and 22d may be manipulated by the editor, and the single chip microcomputer 31 is, accordingly, branched to the associated sub-routine program SR400, SR500 or SR600, however, the single chip microcomputer 31 immediately returns to the main routine program. Namely, if the "enter" switch 22a is manipulated prior to any manipulation of the "zero" switch 22c, the single chip microcomputer 31 checks the working regifetor array to see whether or not the index code "INDEX" is equal to value "0" as by step S401 (see Fig. 14B). The index code (which has been set to be value "0" in the initialization subroutine program) causes the answer to the step S401 to be given in the positive, and the single chip microcomputer 31 immediately returns to the main routine program. Similarly, the index code of value "0" causes the answer to steps S501 and S601 to be given in the negative, and the single chip microcomputer 31 immediately returns to the main routine program. This results in that any distance or ratio is calculated by the single chip microcomputer 31 prior to deciding an initial position of the cursor 21j for preventing the editor from any incorrect suggestion.

When the editor manipulates the "zero" switch 22c, the single chip microcomputer 31 checks the working regifetor array to see if the data code "TIMER" has value "0" or not as by step 201. The data code "TIMER" has been set to be value "0" in the initialization sub-routine program, so that the answer to the step S201 is given in the positive, and the single chip microcomputer 31 proceeds to step S202. In the step S202, the timer (which is implemented by software) starts with incrementing the data code "TIMER", and the single chip microcomputer 31 returns to the main routine program. If the editor continues to depress the "zero" switch 22c, the single chip microcomputer 31 is branched from the main routine program to the sub-routine program SR200 because the answer to the step S101 is given in the positive again. The answer to the step S201 is changed from the positive to the negative due to the execution of the step S202, so that the single chip microcomputer 31 proceeds to step S203 where the data code "TIMER" is incremented by "one". The single chip microcomputer 31 then checks the working regifetor array to see if the data code "TIMER" reaches a predetermined value N indicative of a second or not as by step S204. If the data code "TIMER" is less than the predetermined value N, the answer to the step S204 is given in the negative, and the single chip microcomputer 31 resets the flag "DISPLAY" to be value "0" as by step S205. With the flag "DISPLAY" of value "0", the single chip microcomputer 31 instructs the panel driver 32 to deenergize the liquid-crystal display panel 26 as by step S206. After the execution at the step S206, the single chip microcomputer 31 returns to the main routine program. If the editor stops depressing the "zero" switch 22c within a second, the liquid-crystal display panel 26 is deenergized only, and the manipulation less than a second is useful after each regulation of the area 41 because of the power saving.

If the editor continues to depress the "zero" switch 22c over a second, the answer to the step S204 is given in the positive. Then, the single chip microcomputer 31 proceeds to step S207 and accesses to the data register 33. As described hereinbefore, the positional data signal representative of the current position of the cursor 21j is periodically supplied from the electric encoder unit 34 and memorized therein. The positional data signal in the data register 33 is fetched by the single chip microcomputer 31 as by step S207, and is transferred to the working regifetor "INITIAL". Thus, the manipulation of the "zero" switch over a second results in determination of a datum point, and, for this reason, it is desirable for the editor to match the cursor with a discriminable position such as, for example, "zero" on the transparent graduated member 21f.

When the step S208 is completed, the single chip microcomputer 312 proceeds to step S209 and sets the flag "DISPLAY" to be value "1". If the flag "DISPLAY" has value "1", the panel driver 32 energizes the liquid-crystal display panel 26. Then, the single chip microcomputer 31 instructs the panel driver 32 to indicate "0.00 mm" on the liquid-crystal display panel 26. The Arabic numeral "0.00" means that the cursor 21j is adjusted to the initial position, and the editor matches the leftmost corner 43a of the original photograph 43 with the cursor 21j.

The single chip microcomputer 31 then proceeds to step S211 where the index code "INDEX" is incremented by one. The single chip microcomputer 31 resets the timer to be value "0" as by step S212 so that the timer is ready for counting the lapse of time again. After the step S212, the single chip microcomputer 31 returns to the main routine program.

After matching the leftmost corner 43a of the original photograph 43 with the cursor 21j, the editor allows the slider member 21b and, accordingly,. the cursor 21j to slide along the graduated transparent plate 21f in the right direction. The electric encoder unit 34 measures the length over which the slider member 21b travels, and the positional data signal is successively fed to the data registor 33 so as to indicate the position of the cursor 21j.

Since the single chip microcomputer 31 repeats the main routine program, the decision step S101 is repeatedly executed by the single chip microcomputer 31. The index code "INDEX" has been incremented at the step S211 of the subroutine program SR200, and, for this reason, the answer to the step S301 is given in the positive. With the positive answer, the single chip microcomputer 31 proceeds to step S302 and fetches the positional data signal memorized in the data registor 33. The single chip microcomputer 31 then calculates the difference between the value indicated by the data code "INITIAL" and the value of the positional data signal as by step S303. The difference is indicative of the current position of the cursor 21j and is transferred to the working register "POSITION" as by step S304. As the result, the data code "POSITION" becomes to be equal in value to the difference between the initial data code and the positional data signal. The single chip microcomputer 31 then checks the working register array to see whether or not the flag "DISPLAY" has value "1" as by step S305. The flag "DISPLAY" is set to be value "0" in so far as the editor does not depress the "zero" switch 22c over a second. Then, the panel driver 32 allows the value indicated by the data code "POSITION" to be displayed on the liquid-crystal display panel 26. The single chip microcomputer 31 then returns to the main routine program, but is repeatedly branched to the subroutine program SR300 while the slider member 21b slides on the transparent graduated plate 21f. Thus, the single chip microcomputer 31 periodically renews the position of the cursor 21j, and the position of the cursor 21j thus renewed is indicated on the liquid-crystal display panel 26.

When the cursor 21j arrives at and is matched with the rightmost corner 43b of the original photograph 43, the editor depresses the "enter"switch 22a, and the answer to the decision step S102 is given in the positive. With the positive answer tot he decision step S102, the single chip microcomputer 31 is branched to the sub-routine program SR400 illustrated in Figs. 14A and 14B.

Since the index code "INDEX" has been incremented at the step S211 of the sub-routine program SR200, the answer to the decision step S401 is given in the negative, and the single chip microcomputer 31 proceeds to step S402 and checks the working register array to see if the index code "INDEX" is set to be value "1". While the editor measures the distance L10, no "enter" switch 22c has been depressed yet, and, for this reason, the index code "INDEX" was incremented once as by the step S211. Then, the answer to the decision step S402 is given in the positive, and the single chip microcomputer 31 calculates the difference between the data codes "POSITION" and "INITIAL" as by step S403. The data code POSITION" is indicative of the current position of the cursor at the rightmost corner 43b, so that the difference means the distance L10 between the leftmost corner 43a and the rightmost corner 43b. The single chip microcomputer 31 transfers the difference to the working register "DISTANCE 1" so that the data code "DISTANCE 1" is set to be the value equivalent to the distance L10. After the transferring operation, the single chip microcomputer 31 increments the index code "INDEX" as by step S405, and the index code "INDEX" has value "2" in this stage. The single chip microcomputer 31 then returns to the main routine program.

While the editor moves the electronic rule to the block copy 42, the single chip microcomputer 31 continues to periodically fetch the positional data signal; however, no variation would takes place in so far as the editor fixes the slider member 21b. When the electronic rule is placed on the block copy 42, the editor adjusts the cursor 21j to the leftmost corner 41a of the area 41, and, then, causes the slider member 21b and, accordingly, the cursor 21j to move along the transparent graduated plate 21f. When the cursor 21j arrives at the rightmost corner 41b of the area 41, the editor adjusts the cursor 21j to the rightmost corner 41b and depresses the "enter" switch 21a again. Then, the single chip microcomputer 31 acknowledges the manipulation through the periodical scanning, and the answer to the decision step S102 is given in the positive.

With the positive answer to the decision step S102, the single chip microcomputer 31 is branched to the sub-routine program SR400, and the answers to the decision steps S401 and S402 are each given in the negative because the index code "INDEX" is incremented by one at each of the steps S211 and S405. The single chip microcomputer 31 then proceeds to step S40$_5$ and checks to see if the index code "INDEX" has value "2". When the distance L20 is measured, the index code "INDEX" has value "2", and, for this reason, the answer to the decision step S406 is given in the positive. Since the position of the cursor 21j at the rightmost corner 41b has been memorized in the working register "POSITION" because the sub-routine program SR300 is periodically executed by the single chip microcomputer 31. At step S407 next to the step S406, the single chip microcomputer 31 subtracts the value indicated by the data code "INITIAL" from the value indicated by the data code "POSITION", and the difference is transferred to the working register "DISTANCE 2" as by step S408. This results in that the data code "DISTANCE 2" is indicative of the distance L20, and the single chip microcomputer 31 proceeds to step S409 for incrementing the index code "INDEX". Then, the single chip microcomputer 31 returns to the main routine program.

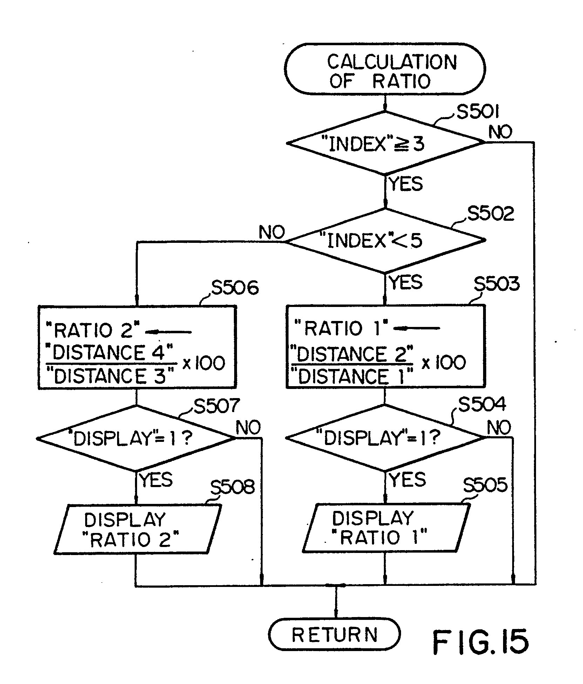

Thus, the editor measures both of the distances L10 and L20, and instructs the electronic rule to calculate a ratio of the distance L20 to the distance L10 (L120/L10) by depressing the percentage switch 22b. The manipulation of the percentage switch 22b is acknowledged at the decision step S103, and the answer to the step S103 is given in the positive. With the positive answer, the single chip microcomputer 31 is branched to the sub-routine program SR500 illustrated in Fig. 15.

When the single chip microcomputer 31 is branched to the sub-routine program SR500, the index code "INDEX" is checked to see if the value thereof is equal to or greater than "3" as by step S501. If the answer to the decision step S501 is given in the negative, the actual lateral distances L10 and L20 have not been determined yet, or the manipulation is not intentional, then the single chip microcomputer 31 returns to the main routine program for preventing the editor from incorrect suggestion. However, if the answer to the decision step S501 is affirmative, the actual lateral distances have already determined, so that the single chip microcomputer 31 checks the index code "INDEX" again to see if the value thereof is greater than five as by step S502. When the editor requests the single chip microcomputer 31 to calculate the ratio of distance L20 to the distance L10, the index code "INDEX" has value 3 because the index code "INDEX" was incremented at the steps S211, S405 and S409. Then, the answer to the decision step S502 is given in the negative, and the single chip microcomputer 31 sequentially fetches the data codes "DISTANCE 1" and "DISTANCE 2" for calculating the ratio. The ratio is given by the following equation.
RATIO 1 = (DISTANCE1 )/(DISTANCE2) x 100 (%)    Equation 2
The ratio thus calculated is represented by the data code "RATIO 1" and the data code "RATIO 1" is transferred to the working register "RATIO 1" as by step S503. The single chip microcomputer 31 checks the flag "DISPLAY" to see whether or not the value thereof is equal to one as by step S504. If the editor does not want any display, he manipulated the "zero" switch 22c within a second, and, accordingly, the flag "DISPLAY" has been set to be value "0". In this situation, the answer to the decision step S504 is given in the negative, and the single chip microcomputer 31 immediatey returns to the main routine program without any indication on the liquid-crystal display panel 26. However, the editor usually wants the liquid-crystal display panel 26 to indicate the calculation result, and, for this reason, the index code "INDEX" remains in value "1", so that the answer to the decision step S504 is affirmative. With the positive answer, the single chip microcomputer 31 proceeds to step S504 and instructs the panel driver 32 to indicate the data code "RATIO 1" on the liquid-crystal display panel 26. The single chip microcomputer 31 then returns to the main routine program. Thus, the ratio of the actual lateral distance L20 to the actual lateral distance L10 is calculated and memorized in the working register "RATIO 1" without any manual data input. For this reason, the electronic rule according to the present invention is free from any error made in the data input manually carried out by the editor, and, accoridngly, the ratio is correct and reliable. This is one of the advantages of the present invention.

However, the original photograph 43 and the area 41 are not always similar to each other, and the editor needs to confirm that a ratio of the actual vertical distance L50 to the actual vertical distance L30 is fallen within the range equal to or less than the ration indicated by the data code "RATIO 1". Then, the editor moves the cursor 21j toward the initial position and adjust the lowest corner 43c to the datum point. When the cursor 21j returns to the initial position or the datum point, the liquid-crystal display panel 26 indicates the positional data code "0.00 mm", so that the editor easily realizes the arraival at the datum point.

Subsequently, the editor moves the slider member 21b and, accordingly, hte cursor 21j in the right direction. If the cursor 21j is adjusted to the corner 43b, the positional data signal is fetched by the single chip microcomputer 31, and the data code "POSITION" is indicative of the length over which the cursor 21j travels as described hereinbefore. When the editor confirms that the cursor 21j is matched with the corner 43b, the "center" switch 22a is depressed by the editor. Then, the single chip microcomputer 31 aknowledges the depressing at the decision step S102, and proceeds to the sub-routine program SR400 with the positive answer to the decision step S102. Even though the sub-routine program SR500 was executed, the index code "INDEX" was not incremented in the sub-routine program SR500, so that each of the answers to the decision steps S401, S402 and S406 is given in the negative. Since the index code "INDEX" has value "3" in so far as the editor depresses the "zero" switch for a while less than a second, the answer to the decision step S410 is affirmative, and the single chip microcomputer 31 proceeds to step S411. At the step S411, the single chip microcomputer 31 subtracts the value of the data code "INITIAL" from the value indicated by the data code "POSITION", and the difference indicative of the actual vertical distance L30 is transferred to the working registor "DISTANCE 3" as by step S412. Subsequently, the single chip microcomputer 31 estimates the vertical distance L40 as folows:

L40 = (DISTANCE 3) x (RATIO 1)/100
Equation 3

The vertical distance L40 thus estimated is transferred to the working registor "ESTIMATE 1", and the single chip microcomputer 31 checks the working registor array to see if the flag "DISPLAY" has value "1". The answer to the decision step S414 is usually affirmative, and, for this reason, the panel driver 32 allows the liquid-crystal display panel 26 to display the vertical distance L40 as by step S415. The index code "INDEX" is then incremented by one as by step S416, and the single chip microcomputer 31 returns to the main routine program. The distance L40 is indicative of the maximum value of the vertical edge of the area 41, and the editor needs to confirm that the actual vertical distance L50 is not greater than the diatance L40.

The editor causes the slider member 21b and, accoridngly, the cursor 21j to return to the datum point, and the cursor 21j is matched with the lowest corner 41c. The editor then moves the cursor 21j and adjusts it to the corner 21b. The position of the cursor 21j is indicated by the positional data signal, and hte positional data siganl is fetched by the single chip mcrocomputer 31 so as to produce the data code "POSITION". In this situation, if the editor depresses the "enter" switch 22a, the answer to the decision step S102 is affirmative, and, accordingly, the single chip microcomputer 31 is branched to the sub-routine program SR400. Since the index code "INDEX" was incremented at the step S416, the index code "INDEX" allows the single chip microcomputer 31 to proceeds to step S417, and the single chip microcomputer 31 further proceeds to step S418 because the answer to the decision step S417 is affirmative. At the step S418, the single chip mcirocomputer 31 subtracts teh value of the data code "INITIAL" from the value indicated by teh data code "POSITION", adn the difference is transferred to the working registor "DISTANCE 4" as by step S419. The data code "DISTANCE 4" thus produced is indicative of the length over which the cursor 21j travels, and hte index code "INDEX" is incremented by one as by step SS420. The single chip microcomputer 31 then returns to the main routine program.

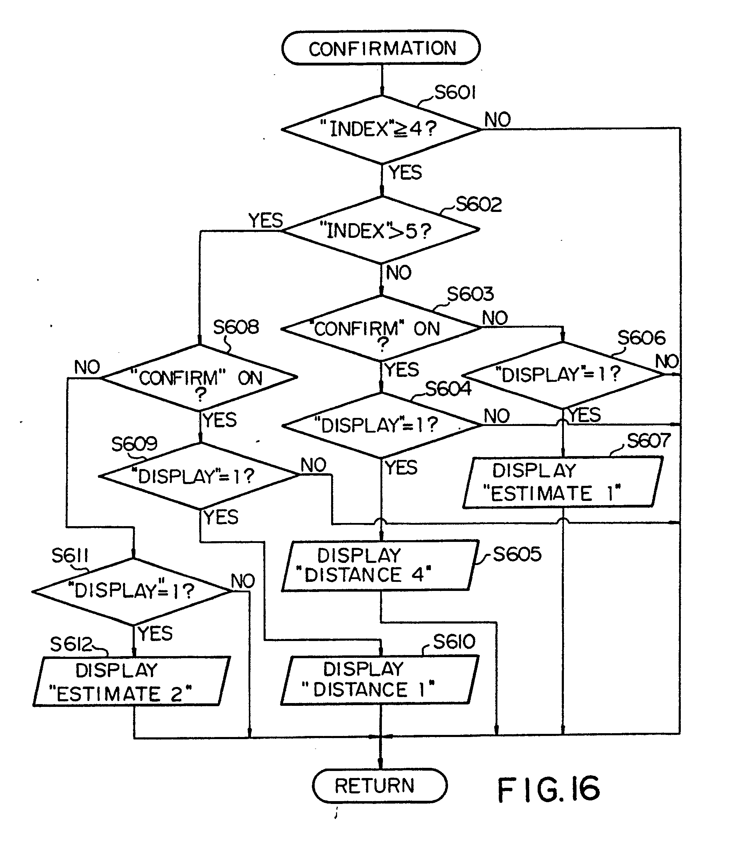

The panel driver 32 was instructed that the vertical distance L40 was displayed at the step S415, so that the vertical distance is still displayed on the liquid-crystal display panel 26 at this stage. However, if the editor depresses the confirmation switch 22d, the answer to hte decision step S104 turns affirmative, and, accoridngly, the single chip microcomputer 31 is branched to the sub-routine program SR600 illustrated in Fig. 16. The single chip microconputer 31 thus branched checks the working registor array to se if the value of the index code "INDEX" is equal to or greater than four as by step S601. If the manipulation is carried out prior to the measurement of the actual vertical distance L50, the answer to the desicion step S601 is given in the negative, so that the single chip microcomputer 31 immediately returns to the main routine program. However, if the answer to teh decision step S601 is affirmative, both of the vertical distances L40 and L50 have been already determined and memorized in the working registor array, then the single chip microcomputer 31 proceeds to step S602 to see if the index code "INDEX" is greater than five. If the actual vertical distance L50 has been just measured, the index code "INDEX" is incremented by one at the step S420, and the answer to teh decision step S602 is given in the negative. With the negative answer, the single chip microcomputer 31 proceeds to step S603 to see whether or not the confirmation switch 22d is still depressed. If the editor continues to depress the confirmation switch 22d, the single chip microcomputer 31 checks the flag "DISPLAY" to see if the value thereof is equal to one as by step S604. If the value of the flag "DISPLAY" is zero, the editor wants any indication to disappear from the liquid-crystal display panel 26, so that the single chip microcomputer 31 immediately returns to the main routine program. However, since the flag "DISPLAY" is usually set to be vaue "1", the single chip microcomputer 31 instructs the panel driver 32 to display the actual vertical distance L50 indicated by teh data code "DISTANCE 4" as by step S605. Then, the single chip microcomputer 31 returns to the main routine program, and the liqueid-crystal display panel 26 continues to display the actual vertical distance L50.

If the editor wants to compare the actual vertical distance L50 with the vertical distance L40 again, the editor releases the confirmation switch 22d, and the release results in the negative answer to the decision step S603. With the negative answer, the single chip microcomputer 31 checks the working register array to see if the flag "DISPLAY" is equal to one as by step S606. The flag "DISPLAY" is usually set to be value "1", and, for this reason, the single chip microcomputer 31 instructs the panel driver 32 to indicate the vertical distance L40 indicated by the data code "ESTIMATE 1" as by step S607. The single chip microcomputer 31 then returns to the main routine programs and the liquid-crystal display panel 26 continues to display the vertical distance L40 to be estimated. Thus, the single chip microcomputer 31 alternates the vertical distance L40 with the actual vertical distance L50 depending upon the confirmation switch 22d, so that the editor easily confirms that the vertical distance L40 to be estimated is fallen within the range to be allowed. If the

Assuming now that the vertical distance L40 is out of the range to be allowed, the editor needs to determine a new magnification ratio, so that the editor depresses the percentage switch 22b. Upon depressing the percentage switch 22b, the answer to the decision step S103 is affirmative, and the single chip microcomputer 31 is branched to the sub-routine program SR500. The value of the index code "INDEX" is equal to five in this stage, and the answer to the decision step S501 is affirmative, but the answer to the decision step S502 is given in the negative. Then, the single chip microcomputer 31 proceeds to step S506 and calculates a ratio of the actual vertical distance L50 to the actual vertical distance L30 as follows:

Ratio = (DISTANCE 4/DISTANCE 3) x 100 (%)
Equation 4

The ratio thus calculated is memorized in the working register "RATIO 2", and the index code "INDEX" is checked to see if the value thereof is equal to one as by step S507. If the answer to the decision step S507 is given in the negative, the single chip microcomputer 31 immediately returns to the main routine program, but the answer to the decision step S507 is usually affirmative, then the single chip microcomputer 31 instructs the panel driver 32 to display the ratio indicated by the data code "RATIO 2". The single chip microcomputer 31 then returns to the main routine program.

When the new ratio is thus calculated on the basis of the vertical distances L30 and L50, the editor confirms that the new ratio is correct in terms of the actual lateral distance L10. The editor measures the actual lateral distance L20, and depresses the "enter" switch 22a. The "enter" switch 22a thus depressed is acknowledged at the decision step S102, and the single chip microcomputer 31 is branched to the sub-routine program SR400. Since the index code "INDEX" is as large as five due to the increment at the step S420, the answer to each of the decision steps S401, S402, S406, S410 and S417 is given in the negative, and the single chip microcomputer 31 subtracts the data code "INITIAL" from the data code "POSITION" so as to determine the actual lateral distance L20 as by step S421. The lateral distance L60 is estimated as follows:

L60 = (DIFFERENCE or L20) x 100/(RATIO 2)
Equation 5

The lateral distance L60 thus calculated is transferred to the working register "ESTIMATE 2" as by step S422. The single chip microcomputer 31 then checks the working register array to see if the flag "DISPLAY" has value "1" as by step S423. If the answer to the decision step S423 is given in the negative, the single chip microcomputer 31 immediately returns to the main routine program. However, since the flag "DISPLAY" is usually set to be value "1", the single chip microcomputer 31 instructs the panel driver 32 to display the lateral distance L60 indicated by the data code "ESTIMATE 2". The single chip microcomputer 31 then proceeds to step S425 and increments the index code "INDEX", then retuning to the main routine program for recycling the loop.

In order to compare the actual lateral distance L10 with the lateral distance L60 to be estimated, the editor depresses the confirmation switch 22d, and the single chip microcomputer 31 is branched from the step S104 to the sub-routine program SR600. Since the index code "INDEX" was incremented at the step S425, the answer to the decision step S601 is given in the negative, but the single chip microcomputer 31 proceeds to step S608 with the positive answer to the decision step S602. At the step S608, the single chip microcomputer 31 checks the confirmation switch 22d to see whether or not the switch 22d is still depressed by the editor. If the editor continues to depress the confirmation switch 22d, the answer to the decision step S608 is affirmative, so that the flag "DISPLAY" is checked to find if the value thereof is equal to one as by step S609. Whenever the flag "DISPLAY" is reset to be value "0", the single chip microcomputer 31 immediately returns to the main routine program. However, the flag "INDEX" is usually set to be value "1", so that the single chip microcomputer 31 instructs the panel driver 32 to cause the liquid-crystal display panel to display the actual lateral distance L10. The single chip microcomputer then returns to the main routine program.

If the editor wants to see the lateral distance L60, the confirmation switch 22d is released and, accordingly, the answer to the decision step S608 is given in the negative. Then, the flag "DISPLAY" is checked again as by step S611, and the single chip microcomputer usually proceeds to step S612 with the positive answer to the decision step S611 for giving an instruction so as to display the lateral distance L60 indicated by the data code "ESTIMATE 2". Then, the liquid-crystal display panel 26 indicates the lateral distance L60 even though the single chip microcomputer 31 returns to the main routine program. Thus, the single chip microcomputer 31 alternates the lateral distances L60 with the actual lateral distance L10 depending upon the manipulation of the confirmation switch 22d, and the editor can confirm that the lateral distance L60 to be estimated is smaller in value than the actual lateral distance L10.

When the new ratio is confirmed through the comparison, the casting off is completed for the original photograph 43, and the editor depresses the "zero" switch 22c for a while less than a second, thereby saving the power consumption. However, if the editor carries out the casting off for another photograph, the "zero" switch 22c is depressed over a second, and not only the main routine program but also the sub-routine programs SR200 to SR600 are repeated by the single chip microcomputer 31.

As will be understood from the foregoing description, the electronic rule according to the present invention is free from any error made in the data input because the single chip microcomputer 31 memorizes the distances L10, L20, L30 and L50 in the working registor array and further fetches those data upon calculating the ratios. The electronic rule according to the present invention is further advantageous over the prior art digitizer system in cost and manipulability because the built-in calculator associated with the encoder unit 34 carries out the calculation. This results in that each editor privately uses the electronic rule, and, for this reason, the casting off is quickly completed with the assistance of the electronic rule.

Although the particular embodiment of the present invention has been shown and described, it will be obvious to those skilled in the art that various changes and modifications may be made without departing from the spirit and scope of the present invention. For example, datum point may be established upon each measurement, and the "zero" switch 22c is manipulated upon each establishment of the datum point.

depending upon a length overwhich said slider member is moved, characterized by c) magnification ratio calculating means for calcurating a ratio of a first distance to a second distance, said first and second distances being decided by said measuring means and supplied thereto.

## Claims

1. An electronic rule comprising a) a rule unit including a graduated member and a slider member supported by the graduated member and movable therealong, said slider member having a mark for providing an interrelation between the graduated member and an object, and b) measuring means for deciding a distance between two target points

FIG. 1
PRIOR ART

**FIG.2**

**FIG.3**

FIG.4

ENTER   %   ZERO   CNF

FIG.5

ENCODER UNIT — 34

0.00mm — 26

22a
22b  22d
22c  22e

REGISTOR — 33

DRIVER — 32

35

31

I/O PORT — 31d

31b

31a

ALU & CONTROL

RAM

ROM

31e

31c

FIG.6

EP 0 394 880 A2

FIG.7

FIG.8

FIG.9

EP 0 394 880 A2

```
        ┌──────────┐
        │  START   │
        └────┬─────┘
             │
   ┌─────────┼──────────────────┐
   │    ┌────▼─────────┐  ~S1
   │    │ SELECTION OF │
   │    │  PHOTOGRAPHS │
   │    └────┬─────────┘
   │         │
   │    ╱────▼──────╲      ~S2
   │ NO╱ IS IT MATCH ╲
   ├──╱ FOR THE ARTICLE╲
   │  ╲       ?        ╱
   │   ╲──────┬───────╱
   │          │ YES
┌──┼──────────┼─────────┐
│  │    ┌─────▼────────┐  ~S3
│  │    │ ADJUST THE LEFTMOST │
│  │    │     CORNER    │
│  │    └─────┬────────┘
│  │          │
│  │    ┌─────▼────────┐  S4
│  │    │ READ AND MEMORIZE │
│  │    │  THE POSITION │
│  │    └─────┬────────┘
│  │          │
│  │    ┌─────▼────────┐  S5
│  │    │ ADJUST THE   │
│  │    │ RIGHTMOST CORNER │
│  │    └─────┬────────┘
│  │          │
│  │    ┌─────▼────────┐  S6
│  │    │ READ AND MEMORIZE │
│  │    │  THE POSITION │
│  │    └─────┬────────┘
│  │          │
│  │    ┌─────▼────────┐  S7
│  │    │ CALCULATE A DISTANCE │
│  │    │ BETWEEN THE CORNERS │
│  │    └─────┬────────┘
│  │          │
│  │    ╱─────▼──────╲    S8
│  │ NO╱ IS THE DISTANCE╲
│  └──╱  DETERMINED ?    ╲
│     ╲──────┬──────────╱
│            │ YES
│          ┌─▼─┐
│          │ X │
│          └───┘
```

FIG.IOA

(X)

SELECTION OF FRAMES — S9

IS IT SERVE AS THE AREA ? — S10
NO / YES

ADJUST THE LEFTMOST CORNER — S11

READ AND MEMORIZE THE POSITION — S12

ADJUST THE RIGHTMOST CORNER — S13

READ AND MEMORIZE THE POSITION — S14

CALCULATE A DISTANCE BETWEEN THE CORNERS — S15

IS THE DISTANCE DETERMINED ? — S16
NO / YES

$$RIO = \frac{DISTANCE\ L20}{DISTANCE\ L10} \times 100$$ — S17

MEMORIZATION — S18

END — S19

FIG.10B

POWER ON

INITIALIZATION — SR100

"DISPLAY" ⟶ 「0」
"TIMER" ⟶ 「0」
"INITIAL" ⟶ 「0」
"POSITION" ⟶ 「0」
"INDEX" ⟶ 「0」
"DISTANCE 1" ⟶ 「0」
"DISTANCE 2" ⟶ 「0」
"DISTANCE 3" ⟶ 「0」
"DISTANCE 4" ⟶ 「0」
"RATIO 1" ⟶ 「0」
"RATIO 2" ⟶ 「0」
"ESTIMATE 1" ⟶ 「0」
"ESTIMATE 2" ⟶ 「0」

S101 — "ZERO" ON ? — YES ⟶ DETERMINATION OF INITIAL POSITION — SR200

NO ⟶ SR300 — CALCULATION OF ACTUAL POSITION

S102 — "ENTER" ON ? — YES ⟶ DETERMINATION OF DISTANCE — SR400

NO

S103 — " % " ON ? — YES ⟶ CALCULATION OF RATIO — SR500

NO

S104 — "CNF" ON ? — YES ⟶ CONFIRMATION — SR600

NO

FIG.11

DETERMINATION OF
INITIAL POSITION

S201 — "TIMER"=$\ulcorner 0 \lrcorner$ ? — YES

NO

S203 — "TIMER"—"TIMER"+$\ulcorner 1 \lrcorner$

S202 — "TIMER"——"TIMER"+$\ulcorner 1 \lrcorner$

S204 — "TIMER"$\geqq$ N ? — NO

YES

S207 — READ POSITIONAL DATA SIGNAL

S205 — "DISPLAY"——$\ulcorner 0 \lrcorner$

S208 — TRANSFER TO "INITIAL"

DEENERGIZE THE LIQUID-CRYSTAL DISPLAY PANEL

S206

S209 — "DISPLAY"——$\ulcorner 1 \lrcorner$

S210 — DISPLAY "0.00mm"

S211 — "INDEX"——$\ulcorner 1 \lrcorner$

S212 — "TIMER"——$\ulcorner 0 \lrcorner$

RETURN

F I G. 12

CALCULATION OF
ACTUAL POSITION

S301

"INDEX" ≧ ⌐1⌐ ?　　　NO

YES

S302

READ
POSITIONAL
DATA SIGNAL

S303

CALCULATE
DIFFERENCE FROM
INITIAL POSITION

S304

"POSITION"——DIFFERENCE

S305

"DISPLAY"= ⌐1⌐ ?　　　NO

YES

S306

DISPLAY
"POSITION"

RETURN

FIG.13

```
          ┌─────────────────────┐
          │  DETERMINATION      │
          │  OF  DISTANCE       │
          └─────────────────────┘
                    │
   S401          ◇◇◇◇◇◇◇          YES
          ⟨ "INDEX" = 0 ? ⟩ ──────────────────────→ (A)
                    │ NO
   S402          ◇◇◇◇◇◇◇          YES
          ⟨ "INDEX" = 1 ? ⟩ ──────────────┐
                    │ NO                   │
                    │            ┌──────────────────────┐  S403
                    │            │ CALCULATE            │
                    │            │ DIFFERENCE BETWEEN   │
                    │            │ "POSITION" AND       │
                    │            │ "INITIAL"            │
                    │            └──────────────────────┘
                    │                      │
                    │            ┌──────────────────────┐  S404
                    │            │ TRANSFER   THE       │
                    │            │ DIFFERENCE   TO      │
                    │            │ "DISTANCE 1"         │
                    │            └──────────────────────┘
                    │                      │
                    │            ┌──────────────────────┐  S405
                    │            │"INDEX"←"INDEX"+「1」   │
                    │            └──────────────────────┘
                    │                      │
                    │                     (A)
   S406          ◇◇◇◇◇◇◇          YES
          ⟨ "INDEX" = 2 ? ⟩ ──────────────┐
                    │ NO                   │
                    │            ┌──────────────────────┐  S407
                    │            │ CALCULATE            │
                    │            │ DIFFERENCE BETWEEN   │
                    │            │ "POSITION" AND       │
                    │            │ "INITIAL"            │
                    │            └──────────────────────┘
                    │                      │
                    │            ┌──────────────────────┐  S408
                    │            │ TRANSFER   THE       │
                    │            │ DIFFERENCE  TO       │
                    │            │ "DISTANCE  2"        │
                    │            └──────────────────────┘
                    │                      │
                    │            ┌──────────────────────┐  S409
                    │            │"INDEX"←"INDEX"+「1」   │
                    │            └──────────────────────┘
                    │                      │
                   (B)                    (A)
```

## FIG. 14A

FIG.14B

FIG.15

EP 0 394 880 A2

FIG.16